# FASCICULE DE BREVET EUROPEEN

(11) **EP 2 855 655 B1**
(45) Date de publication et mention de la délivrance du brevet: **13.07.2016**
(21) Numéro de dépôt: 13742743.1
(22) Date de dépôt: 05.06.2013
(51) Int. Cl.: C12C 7/00

(54) **PROCÉDÉ DE BRASSAGE CONTINU OU SEMI-CONTINU**
KONTINUIERLICHES ODER HALBKONTINUIERLICHES BRÜHVERFAHREN
CONTINUOUS OR SEMI-CONTINUOUS BREWING METHOD

(30) Priorité: 04.06.2012 BE 201200375
(43) Date de publication de la demande: 08.04.2015
(73) Titulaire: Meura S.A., 7600 Péruwelz (BE)
(72) Inventeur: DE BRACKELEIRE, Christian, B-1933 Sterrebeek (BE); HARMEGNIES, Frédérique, B-4210 Oteppe (BE)
(74) Mandataire: Office Kirkpatrick
(86) Numéro de dépôt international: PCT/IB2013/054621
(87) Numéro de publication internationale: WO 2013/183006

(56) Documents cités:
- EP-A1- 0 673 997
- EP-A2- 0 088 397
- WO-A1-2007/136252
- WO-A1-2009/083205
- DE-A1-102009 036 323
- GB-A- 854 455
- Anonymous: "The MEURABREW: the brewhouse of the future!", Meura , 1 janvier 2007 (2007-01-01), XP055041434, Extrait de l'Internet: URL:http://www.meura.com/uploads/pdf/Meura brew%20Paper.pdf [extrait le 2012-10-17]
- Anonymous: "Bierbrauen", Wikipedia, die freie Enzyklopädie , 21 avril 2010 (2010-04-21), XP002685438, Extrait de l'Internet: URL:http://de.wikipedia.org/wiki/Bierbraue n [extrait le 2012-10-16]

## Description

La présente invention concerne un procédé de production continue ou semi-continue de moût dans les industries brassicoles, les distilleries et industries de fabrication d'extraits. L'invention concerne une amélioration d'un procédé de brassage continu ou semi-continu et permet de produire un moût froid clarifié.

Un procédé de brassage continu a été développé par la demanderesse, Meura, à partir de 1998 et a conduit à une première exploitation industrielle en 2007. Ce procédé de brassage (« Meurabrew ») peut être utilisé en continu des étapes 1 à 8 ou en semi-continu (étape 1 à 4 en batch et 5 à 8 en continu) comprend les étapes de :
1) Broyage fin en voie sèche ou humide des matières premières contenant de l'amidon (Milling)
2) Empatage : (Mashing-in)
3) Brassage en cuves homogénéisées et chauffées par injection de vapeur directe
4) Filtration de la maische à 76-78°C pour séparer le moût des insolubles (drêches)
5) Traitement thermique en cuve homogénéisée et chauffée par injection de vapeur directe (wort boiling / formation)
6) Clarification du moût chaud en général par décantation ou par centrifugation pour éliminer le trub. Le trub chaud est un précipité principalement protéique.
7) Stripping à la vapeur d'eau : le moût est débarrassé de ses composés volatiles indésirables
8) Refroidissement du moût : Wort cooling, et transfert en continu vers la fermentation

Ce procédé est couramment utilisé avec des filtres-presses du type à couche mince. Toutefois, on ne sort pas du cadre de la présente invention si, au lieu d'effectuer une filtration, la drêche est éliminée dans un décanteur centrifuge.

Ce procédé est particulièrement adapté aux moutures fines, c'est-à-dire dont plus de 45 à 60 % de la mouture passent un tamis de 0,253 mm.

En comparaison d'un système batch, ce procédé continu présente des avantages en termes de consommation et de pics de demande d'énergie, de rendement, de productivité et de réduction des effluents.

Le document XP55041434 décrit également un procédé de brassage du moût de type"Meurabrew".

Il est d'usage courant de filtrer la maische à une température de 76-78 °C. Cette température correspond à la température maximale à laquelle l'alpha-amylase endogène du malt est encore active. Il était donc généralement reconnu que cette température ne devait pas être dépassée pour que la dégradation de l'amidon résiduel éventuel puisse se poursuive pendant la séparation de la maische (étape 4) et soit donc optimale.

Les objectifs de la présente invention sont:
- de réduire encore la consommation d'énergie nécessaire ;
- d'améliorer les propriétés organoleptiques relatives au vieillissement de la bière en raccourcissant le temps de séjour du moût à des températures élevées ; en effet les températures élevées utilisées pour le traitement thermique du moût sont propices aux réactions de Maillard et Strecker responsables du brunissement du moût, de la formation de composés indésirables (notamment des aldéhydes) et d'un potentiel dégagement gazeux qui peut perturber la clarification du moût par sédimentation;
- d'optimiser la quantité de trub dans le mout. Un excès de trub pourrait conduire à des difficultés dues à l'encrassement prématuré du refroidisseur à moût ainsi qu'une saturation de la surface des levures entraînant une moindre efficacité des échanges cellulaires et donc de la fermentation;

La présente invention est particulièrement adaptée pour les procédés utilisant des filtres à couches minces, c'est-à-dire dont la couche de gâteau est comprise entre 20 et 100 mm, telles que le filtre presse Meura 2001.

La présente invention est également bien adaptée pour les procédés de brassage utilisant des moutures fines, c'est-à-dire dont plus de 45 à 60% de la mouture passent un tamis de 0,253 mm. Le document WO2007136254 (B1) décrit un procédé continu qui préconise d'éliminer le trub par centrifugation, après ébullition et stripping. Pour être efficace, l'élimination du trub doit être effectuée à une température inférieure à 80°C, de préférence inférieure à 65°C.

Il a été découvert qu'il est possible de fournir, par un procédé continu, énergétiquement économe, un moût possédant une quantité très faible de trub et préservant les qualités organoleptiques lors du vieillissement de la bière, en effectuant une clarification à une température comprise entre 80 et 90 °C, de préférence entre 82 et 87°C, de manière encore préférée par décantation statique.

Il a été découvert que cette température, tout en limitant la consommation d'énergie, préserve les caractéristiques de sédimentation du trub tout en permettant de réduire les vitesses de réaction de vieillissement du moût.

La présente invention a pour objet un procédé de brassage (continu ou semi-continu) qui comporte au moins les étapes suivantes :
a) préparation d'une ou plusieurs maisches par empâtage de matières premières contenant de l'amidon, maltées ou non, préalablement broyées ou pas,
b) brassage de la (des) maische(s) pour hydrolyser l'amidon en sucres fermentescibles ;
c) séparation de la drêche pour obtenir un moût ;
d) traitement thermique du moût à une température comprise entre 95°C et 140°C
e) refroidissement du moût jusqu'à une température comprise entre 80°C et 90°C ;
f) clarification continue du moût à une température comprise entre 80°C et 90°C ;
g) refroidissement du moût clarifié pour le porter à la température de fermentation;
les étapes d) à g) (au minimum) étant réalisées en continu.

De préférence, la séparation de la drêche (étape c) est effectuée à une température comprise entre 80 et 90 °C.

De préférence, le procédé selon l'invention comprend une étape de stripping pour éliminer les composés volatiles indésirables. Cette étape est de préférence réalisée après l'étape f) de clarification. Dans ce cas, il a été découvert, qu'il est préférable d'utiliser, comme gaz d'entrainement, un gaz incondensable à la température de travail (air, CO₂, N₂, ... ). L'air a l'avantage d'être facilement disponible dans une brasserie.

Le gaz d'entrainement peut avantageusement être injecté à une température comprise entre 80°C et 140°C, de préférence entre 80 et 90°C.

L'objet de l'invention est donc aussi un procédé de brassage (continu ou semi-continu) qui comporte au moins les étapes suivantes :
a) préparation d'une ou plusieurs maisches par empâtage de matières premières contenant de l'amidon, maltées ou non, préalablement broyées,
b) brassage de la (des) maische(s) pour hydrolyser l'amidon en sucres fermentescibles ;
c) filtration de la maische sur filtre à couches minces, à une température comprise entre 80 et 90°C, pour obtenir un mout dont on a éliminé la drêche ;
d) traitement thermique du moût à une température comprise entre 95°C et 105°C ;
e) refroidissement du moût jusqu'à une température comprise entre 80°C et 90°C ;
f) clarification continue du mout à une température comprise entre 80°C et 90°C ;
g) stripping du moût à 80-90°C avec, comme gaz d'entrainement, un gaz incondensable à la température de travail;
h) refroidissement du moût clarifié pour le porter à la température de fermentation continu ;
les étapes d) à g) (au minimum) étant réalisées en continu.

Selon des modes de réalisation avantageux, la clarification (étape f) est effectuée dans un décanteur statique, qui permet de récolter le trub précipité dans le fond du décanteur.

Ce trub peut être éliminé en continu et être réintroduit dans la maische entre l'étape b) de brassage et l'étape c) de séparation de la drêche.

Les températures préférées pour l'étape c) de séparation et pour l'étape f) de clarification sont comprises entre 82 et 87 °C, de manière encore préférée à 85°C.

Il a été découvert que cette température, non problématique dans le cas de moutures fines où la probabilité d'amidon résiduel en fin de brassage est très faible, permet de précipiter une fraction plus importante de protéines en amont de l'étape du filtre à maische, avec comme résultat un filtrat en partie préalablement clarifié et un temps de filtration réduit.

La température de brassage (étape b) est, de manière préférée, augmentée à l'aide d'injection directe de vapeur à une pression comprise entre 0,2 et 4 bars, de préférence entre 0,7 et 2 bars.

En particulier, la séparation de la drêche (étape c) est effectuée par filtration. Le procédé est particulièrement adapté à l'utilisation de filtres-presses, en particulier à couches minces du type Meura 2001. Avantageusement, deux ou trois filtres-presses peuvent être mis en parallèle.

Le procédé est particulièrement adapté lorsque les matières premières sont préalablement broyées jusqu'à l'obtention d'une mouture fine. Par mouture fine, on comprend les moutures dont plus de 45%, de préférence plus de 55% et de manière encore préférée plus de 60% passent un tamis dont les ouvertures sont de 0.253 mm.

Des moutures fines typiquement recommandées avec les filtres Meura 2001® sont des moutures dont le profil se répartit comme suit sur un tamiseur Plansichter (normes brassicoles) :

**Tableau 1 : Distribution granulométrique de la mouture de malt spécifiée pour un filtre Meura 2001® suer un tamiseur Plansichter**

| | *Ouvertures du tamis (mm)* | *Quantité retenue (%)* |
|---|---|---|
| Tamis 1 | 1,27 | 0-1 % |
| Tamis 2 | 1,01 | 0-4 % |
| Tamis 3 | 0,547 | <10 % |
| Tamis 4 | 0,253 | > 20 % |
| Tamis 5 | 0,152 | > 20 % |
| Fond | Fond | < 40 % |

Les matières premières contenant de l'amidon, sont souvent des céréales maltées ou non. On pourra utiliser du malt, orge, riz, maïs, sorgho, seigle, blé, avoine, manioc,... ou toute forme d'amidon disponible sur le marché.

Lors de l'étape d) d'ébullition, le moût est de préférence maintenu dans une cuve de formation à une température comprise entre 95 et 105°C pendant un temps de résidence compris entre 20 et 75 min, de préférence compris entre 30 et 50 min.

### EXEMPLE DE REALISATION

### Exemple 1

Cet exemple a été réalisé sur une ligne pilote de 4hl/h.

### Etapes 1 et 2 : broyage /empâtage

Un flux de 95kg/h d'orge maltée est mélangée avec 225L/h d'eau d'empâtage à une température de 48°C ou plus (48°C-66°C) dans un système combiné de broyage fin/ empâtage effectué sous eau (Hydromill®), et alimente en continu une cuve d'empâtage agitée. L'écartement des disques de broyage est de l'ordre de 0,3 à 0,5 mm. La finesse de la mouture obtenue est similaire à la mouture sèche spécifiée ci-dessus.

De l'acide (H₃PO₄) est dosé dans l'eau d'empâtage pour l'obtention d'une maische à pH 5,4. Un gaz inerte tel que du CO₂ peut être injecté au broyage ou à l'empâtage afin de prévenir l'oxydation.

Le mélange, appelé « maische », remplit la cuve d'empâtage en 30 à 50 minutes afin d'obtenir un temps de résidence moyen de 15 à 25 minutes.

### Etape 3 : Brassage

Ensuite, la maische est pompée continuellement à un débit de 301/h dans des réacteurs verticaux agités nommés « cuves de brassage continues ». Sur base du principe de cuve parfaitement agitée, les temps de résidence de la maische dans ces réacteurs sont déterminés par le flux de maische entrant et sortant, et par le niveau réglé dans les cuves. La maische est pompée en continu à travers les réacteurs placés en série (cuve d'empâtage suivie du réacteur 1 suivi du réacteur 2 suivi du réacteur 3). Chaque réacteur est maintenu à une température constante à l'aide de la chauffe par injection de vapeur directe avec des injecteurs de type Aflosjet®. La pression de vapeur pour la chauffe directe se situe entre 1 et 1,5 bars afin de limiter la charge thermique sur le produit. Ce système est décrit dans le brevet EP 1 752 528-B1 de la demanderesse.

L'agitation dans les cuves est douce (vitesse périphérique de l'agitateur de 1 m/sec), dont le seul but est l'homogénéité de la maische dans la cuve, ce qui limite également les forces de cisaillement.

Un diagramme de brassage classique est appliqué pour ce brassin 100% orge maltée, à savoir un empâtage à 48°C (cuve empâtage), suivie par un palier à 63°C (reacteur1) pour l'activité B-amylase, puis 72°C (réacteur 2) pour l'activité alpha-amylase, mais ensuite avec une température finale de 85°C à la place du 76°- 78°C classique (réacteur3). Avec une température finale de la maische de 85°C ou plus, il est préférable d'utiliser une mouture fine des matières premières et un diagramme de brassage qui conduit à une saccharification complète de l'amidon, de sorte d'être assuré de la non-présence d'amidon résiduel dans la maische. L'amidon résiduel dans la maische provoquerait des problèmes lors de la « filtration maische » ainsi que lors de la « filtration bière » plus loin dans le procédé froid, après fermentation.

A haute température, les protéines présentes dans la maische commencent à précipiter pour former le « trub ».

### Etape 4 : filtration

L'unité de filtration consiste en 3 filtres à membrane à couche mince Meura 2001® (capacité de 88 kg), qui simule un fonctionnement en continu en travaillant en parallèle. Un cycle de filtration comprend les étapes suivantes : remplissage, filtration, pré-compression, lavage, compression, débâtissage.

La filtration 1 commence dans le filtre 1, suivie de la filtration 2 dans le filtre 2, suivie de la filtration 3 dans le filtre 3, ensuite la filtration 4 dans le filtre 1, etc...

Il faut noter que comparativement à une filtration traditionnelle à 78°C, avec une filtration à 85°C, le temps de filtration est réduit de 15 à 25%.

### Etape 5 : houblonnage et ébullition

Le moût (moût dense et eaux de lavage) à 85°C provenant des différents filtres est collecté dans un tank tampon. Après l'étape de démarrage du brassage continu, les fluctuations sur la densité du moût sont réduites de sorte que la densité moyenne se stabilise à environ 19°Plato.

La température dans la cuve tampon est maintenue entre 85°C et 95°C par chauffage avec vapeur directe Aflosjet®. Le houblonnage est effectué en continu dans la cuve tampon à l'aide de pellets ou d'extrait de houblon et le pH est corrigé en continu à 5,1 à l'aide d'acide phosphorique.

Le moût à 19°P est pompé en continu vers l'unité de traitement thermique du moût à l'aide d'une pompe positive à un débit de 361/h. L'unité continue de traitement thermique du moût se compose d'une cuve de « formation », d'un décanteur statique et d'une colonne de stripping. La cuve de formation est une cuve de 4 hl où la température est maintenue à 100°C avec l'injection de vapeur directe Aflosjet®. Tout comme pour les cuves de brassage, le temps de résidence du moût dans cette cuve de formation est basé sur le principe des cuves parfaitement agitées. Un temps de résidence du moût à 19°P à 100°C peut être ajusté de 30 min à 65 min.

### Etape 6 : Refroidissement

Un point important de l'amélioration du brassage continu est que le moût, après l'étape de formation à 100°C, est refroidi à 85°C au travers d'un échangeur tubulaire (flux en ligne continu) avant la clarification du moût.

Un premier refroidissement du moût à cette étape permet de limiter les réactions de Maillard et de Strecker qui influencent la consistance du trub et le vieillissement du moût, ainsi qu'un éventuel dégagement gazeux perturbateur de la sédimentation. L'énergie récupérée de ce refroidissement est réutilisée pour le réchauffage du moût de 85°C à 98°C entre la cuve tampon et la cuve de formation.

### Etape 7 : Décantation

Le moût à 85°C alimente alors le décanteur statique à un flux constant de 36L/h. Le décanteur statique fonctionne également selon un procédé continu. Le moût clarifié s'écoule de la sortie haute du décanteur tandis que le trub précipite dans le fond conique de celui-ci. Le trub (environ 5% du flux de moût) est éliminé du fond en continu via une pompe péristaltique et transféré vers la ligne de maische entre les cuves de brassage et les filtres à maische.

Grâce à l'utilisation d'un décanteur statique pour la clarification du moût, le trub n'est ni oxydé ni soumis à des forces de cisaillement et peut par conséquent être recyclé sans impact négatif sur la qualité du produit ou sur la filtrabilité de la maische. Ceci permet de maximiser la récupération de l'extrait dans la salle de brassage.

### Etape 8 : Stripping

Le moût clarifié à 85°C alimente en continu la colonne de stripping pour une élimination efficace des composés volatils indésirables avant refroidissement du moût. Le moût étant à 85°C, il s'est avéré préférable d'éviter l'utilisation de la vapeur comme fluide porteur des volatiles. En effet, le stripping communément utilisé à l'aide de vapeur dans des procédé de l'état de la technique s'avère très efficace quand il est appliqué sur du moût à 100°C. Dans le cas de la présente invention où le moût est à 85°C, l'utilisation de vapeur provoquerait dans un premier temps le réchauffement du moût de 85 à 100°C (avec effet de condensation et dilution non souhaitée du moût) avant son action recherchée d'entraînement des volatiles à 100°C.
Par conséquent, le stripping du moût à 85°C est effectué préférentiellement avec de l'air à un flux de 0,8 NM²/h (ratio air/moût de 0,3%). Le graphe 1 montre l'efficacité du stripping à l'air à 85°C pour le diméthylsulfure (DMS) et les aldéhydes.
On peut y observer que le DMS (diméthylsulfure) a été éliminé à 85% et les aldhéhydes de Strecker (2-methylpropanal ; 2-methylbutanal ; 3-methylbutanal) ont été éliminés de 65 à 75%.

L'analyse des "marqueurs d'oxydation" a été également effectuée sur le moût strippé à l'air et ne montre pas d'influence négative sur la qualité du moût.

### Etape 9 : refroidissement à température de fermentation

Après le stripping à l'air en ligne, le moût alimente le refroidisseur à moût en continu pour être refroidi à la température de fermentation.

Dans ces conditions opératoires de brassage continu amélioré (filtration maische à 85°C - clarification moût à 85°C - stripping à l'air 85°C), le moût à 19°P est produit en respectant les exigences qualitatives.

Le tableau 2 montre l'amélioration de l'élimination du trub entre un procédé continu classique et un procédé continu selon l'invention, après l'étape 5, 7 et 8. A la fin du procédé selon l'invention, la quantité de trub a été réduite de moitié environ. Après stripping tel qu'effectué dans l'exemple de réalisation, avec de l'air comme gaz d'entrainement, la turbidité du moût est inférieure à 5 ml/L.

**Tableau 2 : concentrations en trub dans le moût - comparatif brassage continu classique et brassage continu amélioré**

| | **Sortie cuve d'ébullition (étape 5)** | **Sortie décanteur (étape 7)** | **Sortie Stripping (étape 8)** |
|---|---|---|---|
| Essai continu selon l'invention | 40 ml/l | 3,8 ml/l | 4 ml/l |
| Essai continu classique | 86 ml/l | 8 ml/l | 7,5 ml/l |

Ces valeurs de concentrations en trub sont obtenues avec la méthode des cônes d'Imhoff. Les cônes d'Imhoff sont des cônes gradués de capacité IL. Un échantillon de IL de moût est prélevé et laissé au repos durant 3h à température ambiante. Durant cette période, le précipité protéique de même que les insolubles d'autre nature (pellets de houblon par exemple) décantent et se déposent dans le fond du cône. Après 3h, le volume de sédiments est mesuré et exprimé en ml/L.

### Exemple 2 :

### Exemple industriel - ligne de brassage continu de 200 hl/h - recette de brassage continu 60% orge maltée / 40% grits de maïs

Après une période de démarrage des opérations (<30 minutes) durant laquelle les débits de broyage, d'empâtage et de remplissage des cuves sont plus élevés pour l'obtention d'un volume de maische initial, le régime continu est appliqué comme suit.

### Etape 1 : broyage

Un flux continu de 3,6 T/h d'orge maltée est broyé sur un broyeur à marteaux Classicmill CLM3 avec tamis de 2,5 mm pour l'obtention d'une mouture fine selon les spécifications requises pour un filtre à maische de type Meura 2001®.

**Tableau 3 : Distribution granulométrique de la mouture d'orge maltée**

| | *Ouvertures du tamis (mm)* | *Quantité retenue (%)* |
|---|---|---|
| Tamis 1 | 1,25 | 1,00 % |
| Tamis 2 | 1 | 1,43 % |
| Tamis 3 | 0,5 | 12,99 % |
| Tamis 4 | 0,25 | 26,43 % |
| Tamis 5 | 0,125 | 18,27 % |
| Fond | fond | 39,88 % |

### Etape 2 : Empâtage

La mouture fine de malt est empâtée dans un pré-empâteur mécanique MECHAMASHER avec un ratio de liquide d'empâtage de 2,1 L/kg. Le liquide d'empâtage, à une température de 45°C, est composé d'eau et/ou des moûts faibles issus de la fin du lavage des cycles de filtration de maische.
De l'acide phosphorique est dosé dans la ligne de liquide d'empâtage alimentant le pré-empâteur mécanique afin d'effectuer un ajustement de pH à 5,4.
Si l'ajout d'enzymes ou d'une solution de sels (CaCl₂) au brassage est nécessaire, ce dernier s'effectue également par dosage dans la ligne de liquide d'empâtage alimentant le pré-empâteur mécanique.
La pompe du pré-empâteur mécanique transfère la maische (mouture fine de malt empâtée avec le liquide d'empâtage) vers la cuve d'empâtage à un débit continu de 100 hl/h.

En parallèle, les grits de maïs sont empâtés dans un hydrateur placé sur la partie supérieure de la cuve d'empâtage des grains crus, à un débit de 2,4T/h. L'eau d'empâtage ainsi que les enzymes alimentent l'hydrateur pour l'obtention d'un ratio d'empâtage de 2,4 L/kg.

### Etape 3 : brassage

La maische de grains crus, à une température de 60°C environ, est transférée vers la cuve de cuisson des grains crus à un débit de 60 hl/h et est chauffée de 60°C à 90°C par un réchauffeur à injection de vapeur directe placé en ligne. La maische de grains crus à 90°C est maintenue à 90°C dans la cuve de cuisson des grains crus par des injecteurs de vapeur directe Aflosjet®.

Les flux de maische de malt à 45°C (cuve d'empâtage) et de maische de maïs à 90°C (cuve de cuisson des grains crus) alimentent conjointement la cuve de brassage MT1 (jusque-là vide) durant 40 minutes à un débit cumulé de 170 hl/h et à une température de réunion de 63°C. Au bout de ce laps de temps commence le pompage de la maische dans la cuve de brassage MT2, les autres cuves étant toujours alimentées en continu. La cuve MT2 est maintenue à une température de 72°C. Après 40 min de remplissage de la cuve MT2 commence le transfert de la maische dans la cuve MT3 maintenue à 85°C, au débit continu de 170 hl/h.

Selon ce mode de fonctionnement continu, toutes les cuves de brassage (empâtage malt + grains crus, cuisson des grains crus, MT1, MT2, MT3) sont maintenues en température à l'aide d'injecteurs de vapeur directe à faible pression (1 bar) de type Meura Aflosjet®, et homogénéisées à l'aide d'agitateurs spécifiques à faible effet de cisaillement. Le temps de séjour « moyen » de la maische dans ces cuves homogénéisées est déterminé par les débits d'entrée et sortie de maische ainsi que par la consigne de niveau de liquide propre à chaque cuve.

### Etape 4 : filtration

La maische en fin de brassage (cuve MT3), à 85°C, alimente dès lors le groupe de filtration constitué de 3 filtres à couche mince à membrane Meura 2001. Les 3 filtres sont similaires et ont chacun une capacité de 4,5 Tonnes de versement malt équivalent. Leur fonctionnement en parallèle (mode « barillet ») permet de traiter le flux continu de maische et d'effectuer 36 cycles de filtration de 40 minutes chacun (étapes de remplissage et filtration) par 24h. Les cycles de filtration de maische sur un filtre Meura 2001 comprennent les étapes suivantes : remplissage, filtration, pré-compression, lavage, compression finale, vidange, dédrêchage.

On entend ici par » lavage » l'opération d'épuisement de la concentration en sucres du gâteau de filtration par de l'eau à la température identique à celle de la maische (85°C), et alimentant le filtre toujours sous pression.

Le fonctionnement en « barillet » implique qu'en fin de remplissage et filtration d'un filtre X, le flux de maische passe alors au remplissage et filtration dans le filtre X+1, et ainsi de suite.
Le moût (liquide issu de la séparation de la maische des matières insolubles), ainsi que la majeure partie des eaux de lavage du gâteau de filtration sont collectés des 3 filtres vers la cuve tampon, de sorte que la densité moyenne du moût dans ce dernier soit de l'ordre de 21°P (°P = gr sucres par 100 gr de moût). Pour ce faire, la fin des eaux de lavage du gâteau de filtration est collectée non pas dans la cuve tampon mais dans la cuve des « moûts faibles ». Le terme moût faibles caractérise le liquide de fin de lavage des gâteaux de filtration, à faible concentration en sucres, de l'ordre de 4-5°P.
Ces « moûts faibles » sont utilisés pour l'empâtage total ou partiel (dépendant du volume requis et de la température) de la mouture de malt dans le pré-empâteur mécanique Mechamasher.
Si le volume de moûts faibles est supérieur au volume à utiliser pour l'empâtage des matières premières, ces moûts faibles (à 85°C), peuvent également être utilisés pour alimenter les filtres pour le début de l'étape de lavage des gâteaux de filtration.
Le tank tampon sert de transition vers l'unité de traitement chaud du moût.

### Etape 5 : houblonnage et ébullition/formation

Ce tank est maintenu à une température entre 85 et 95°C par chauffage direct de vapeur propre de type Aflosjet® et homogénéisé. Le houblonnage s'effectue à ce stade du process, par injection continue d'extrait de houblon dans la cuve tampon, de même que l'acidification du moût (à pH 5,2), par injection continue d'acide dans la cuve tampon.

De cette cuve tampon, le moût à 21°P est transféré en continu vers la cuve d'ébullition/formation à un débit de 220 hl/h, à l'aide d'une pompe centrifuge, et est chauffé par un injecteur de vapeur direct en ligne de la température dans la cuve tampon (85°C/90°C) à 98°C.

La cuve d'ébullition / formation est également une cuve homogénéisée, maintenue à la température de 99,5- 100°C à l'aide d'injecteurs de vapeur directe Aflosjet®. Cette cuve d'ébullition/formation est équipée d'une cheminée de sorte qu'une légère évaporation, de l'ordre de 1%, s'y effectue.

Une fois le volume de moût dans la cuve d'ébullition/formation atteint pour un séjour moyen de 40 minutes à 100°C, le moût est transféré en continu à un débit de 220 hl/h vers le décanteur via un échangeur tubulaire, qui permet de diminuer la température du moût de 100°C à 85°C.

### Etape 6 : clarification

Le décanteur continu a comme principe de fonctionnement que la vitesse ascendante du flux de moût est inférieure à la vitesse descendante du trub (précipité protéique qui a été formé à l'ébullition). De la sorte, le moût clarifié à 20°P quitte le décanteur par la sortie haute à un débit de 200 hl/h tandis que le trub qui a sédimenté quitte le décanteur par le fond conique, pour être récupéré dans le tank à trub.

Le trub issu du décanteur a la spécificité d'être non-oxydé puisqu'aucun contact avec l'air ne survient durant l'étape de clarification continue. Ce trub, qui contient de l'extrait, est entièrement recyclé et injecté dans la cuve de brassage avant transfert de la maische vers l'unité de filtration.
Ce fonctionnement permet de réduire la perte en extrait liée au trub en salle de brassage à quasiment 0%. De surcroit, le recyclage du trub amène également une augmentation du rendement d'houblonnage qui permet de réduire la consommation en extrait d'houblon.
Le trub est pompé du décanteur vers le tank à trub, et du tank à trub vers la cuve de brassage MT3 à l'aide de pompes positives à vis de type pompe Moineau, et ce afin de préserver le trub des effets de cisaillement néfastes à la qualité du produit.

### Etape 7 : stripping

Le moût à 20°P et 85°C est pompé du décanteur continu vers la colonne de stripping à un débit de 200 hl/h. Le moût percole dans la colonne de stripping en un flux descendant, tandis que de l'air est injecté dans cette colonne de stripping en un flux ascendant.

Le ratio air/moût est ajusté en fonction de l'efficacité de stripping souhaitée, dans ce cas de l'ordre de 0,3% poids/poids.

L'air entraîne les composés volatiles et s'échappe par le haut de la colonne dans un condenseur, tandis que le moût à 20°P est collecté dans le bas de la colonne et transféré via une pompe centrifuge à 200 hl/h vers l'unité de refroidissement du moût.

### Etape 8 : refroidissement

L'unité de refroidissement du moût consiste en 2 échangeurs à plaques. Chaque échangeur a une capacité de 200 hl/h, l'un étant en fonctionnement tandis que l'autre est en nettoyage, afin d'assurer la capacité de refroidir le débit de moût de 200hl/h en continu tout au long de la semaine.

### Avantages :

Ce procédé de production continu du moût s'est avéré efficace à la fois pour des raisons de consommation et de pics d'énergie, et pour des raisons de qualité organoleptique liée au vieillissement du moût. Il permet en outre de fournir un mout froid clarifié dont la quantité de trub est faible.

De cette manière, il a été découvert qu'une première partie des protéines sont précipitées avant la filtration de la maische et éliminées pendant cette opération de filtration ; la quantité de trub se formant à l'ébullition est alors moindre et la clarification à la température choisie, permet d'éliminer efficacement le trub en continu.

Ce procédé permet également de réduire le temps de séjour du moût à haute température en refroidissant le moût immédiatement après l'étape d'ébullition / formation, jusqu'à une température de 80-90 °C, réduisant ainsi la charge thermique sur le produit final.

Un autre avantage de l'invention est que la filtration à une température plus élevée permet de réduire le temps de filtration et d'augmenter ainsi la productivité.

Sans sortir du cadre de la présente invention, il peut être envisagé d'effectuer l'étape de stripping avant ou après l'étape de clarification.
Si le stripping est effectué après clarification, il a été découvert qu'il est préférable de ne pas utiliser de la vapeur d'eau. Le réchauffage du moût de 85°C à 100°C causerait une perte d'énergie et une forte dilution du moût final. L'utilisation de l'air ou de tout autre gaz incondensable à la température de travail au lieu de la vapeur d'eau comme gaz d'entraînement des volatils, permet un stripping efficace tout en évitant la dilution du moût et une éventuelle reformation du trub. L'avantage est qu'on élimine les volatiles indésirables juste avant le refroidissement du moût ;
A contrario en cas d'ébullition classique ou stripping avant clarification, il y a une formation « de novo » de ces composés de par le temps de maintien à haute température pendant la clarification..),
Si le stripping est effectué avant la clarification, il est envisageable de garder la vapeur d'eau comme gaz d'entraînement, comme c'est habituellement le cas dans les procédés courants.
Il peut également être envisagé d'effectuer le stripping dans la zone froide.

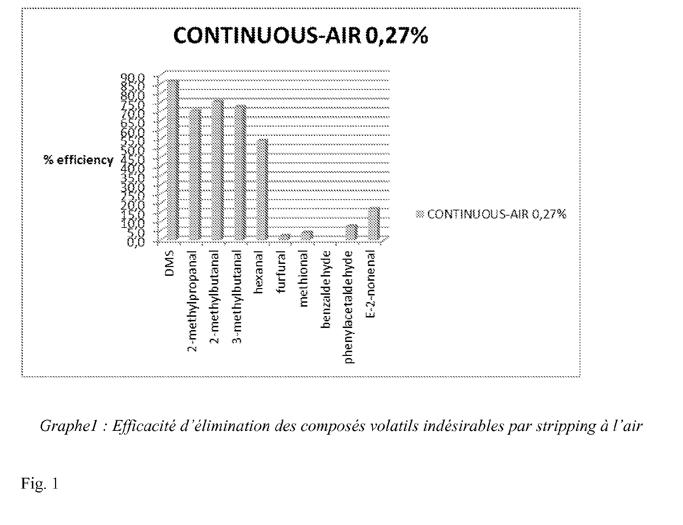

## Revendications

1. Procédé de brassage qui comporte au moins les étapes suivantes :
a) préparation d'une ou plusieurs maisches par empâtage de matières premières contenant de l'amidon, maltées ou non, préalablement broyées ou non,
b) brassage de la maische pour hydrolyser l'amidon en sucres fermentescibles ;
c) séparation de la drêche pour obtenir un moût;
d) traitement thermique du moût à une température comprise entre 95°C et 140°C
e) refroidissement du moût jusqu'à une température comprise entre 80°C et 90°C ;
f) clarification du moût à une température comprise entre 80°C et 90°C ;
g) refroidissement du moût clarifié pour le porter à la température de fermentation ;
les étapes d) à g) étant réalisées en continu.

2. Procédé selon la revendication précédente, **caractérisé en ce qu'**il comprend une étape de stripping pour éliminer les composés volatiles indésirables.

3. Procédé selon la revendication précédente, **caractérisé en ce que** l'étape de stripping est réalisée après l'étape f) de clarification.

4. Procédé selon l'une quelconque des revendications 2 à 3, **caractérisé en ce que** le gaz d'entrainement utilisé pour le stripping est de l'air ou un autre gaz non condensable à la température de travail.

5. Procédé selon l'une quelconque des revendications 2 à 4, **caractérisé en ce que** le gaz d'entrainement utilisé pour le stripping est à une température comprise entre 80°C et 140°C.

6. Procédé selon l'une quelconque des revendications précédentes, **caractérisé en ce que** la clarification (étape f) est effectuée dans un décanteur statique, et **en ce que** du trub précipite dans le fond du décanteur.

7. Procédé selon l'une quelconque des revendications précédentes, **caractérisé en ce que** le trub ayant précipité dans le fond du décanteur est éliminé en continu et est réintroduit dans la maische entre l'étape b) de brassage et l'étape c) de séparation de la drêche.

8. Procédé selon l'une quelconque des revendications précédentes, **caractérisé en ce que** la clarification (étape f) est effectuée à une température comprise entre 82°C et 87°C.

9. Procédé selon l'une quelconque des revendications précédentes, **caractérisé en ce que** la séparation de la drêche (étape c) est effectuée à une température comprise entre 80°C et 90°C, de préférence entre 82°C et 87 °C.

10. Procédé selon l'une quelconque des revendications précédentes, **caractérisé en ce que** la séparation de la drêche (étape c) est effectuée par filtration.

11. Procédé selon la revendication précédente, **caractérisé en ce que** la filtration est effectuée à l'aide de filtres-presses, en particulier deux ou trois filtres-presses mis en parallèle.

12. Procédé selon l'une quelconque des revendications précédentes, **caractérisé en ce que** la température de brassage (étape b) est élevée à l'aide d'injection directe de vapeur à une pression comprise entre 0,2 et 4 bars, de préférence entre 0,7 et 2 bars.

13. Procédé suivant l'une quelconque des revendications précédentes, **caractérisé en ce que** les matières premières préalablement broyées présentent une mouture fine dont plus de 45%, de préférence plus de 55% et de manière encore préférée plus de 60% passent un tamis dont les ouvertures sont de 0.253 mm.

14. Procédé selon l'une quelconque des revendications précédentes, **caractérisé en ce que** lors de l'étape d) d'ébullition le moût est maintenu dans une cuve d'ébullition/formation à une température comprise entre 95°C et 105°C pendant un temps de résidence compris entre 20 et 75 min, de préférence compris entre 30 et 50 min.

15. Procédé de brassage selon la revendication 1 qui comporte au moins les étapes suivantes :
a) préparation d'une ou plusieurs maische par empâtage de matières premières contenant de l'amidon, maltées ou non, préalablement broyées ou non,
b) brassage de la maische pour hydrolyser l'amidon en sucres fermentescibles ;
c) filtration de la drêche sur filtre à couches minces, à une température comprise entre 80 et 90°C, pour obtenir un mout ;
d) traitement thermique du moût à une température comprise entre 95°C et 105°C ;
e) refroidissement du moût jusqu'à une température comprise entre 80°C et 90°C ;
f) clarification continue du moût à une température comprise entre 80°C et 90°C ;
g) stripping avec un gaz incondensable à la température de travail comme gaz d'entrainement ;
h) refroidissement du moût clarifié pour le porter à la température de fermentation ;
les étapes d) à g) étant réalisées en continu.

## Patentansprüche

1. Brauverfahren, das mindestens die folgenden Schritte umfasst:
a) Zubereiten einer oder mehrerer Maischen durch Einmaischen von stärkehaltigen gemälzten oder nicht gemälzten Rohstoffen, die zuvor geschrotet wurden oder nicht,
b) Durchmischen der Maische, um Stärke zu vergärbaren Zuckern zu hydrolysieren;
c) Abtrennen des Trebers, um eine Würze zu erhalten;
d) thermisches Behandeln der Würze bei einer Temperatur zwischen 95 °C und 140 °C;
e) Abkühlen der Würze bis auf eine Temperatur zwischen 80 °C und 90 °C;
f) Klären der Würze bei einer Temperatur zwischen 80 °C und 90 °C;
g) Abkühlen der geklärten Würze, um sie auf die Gärtemperatur zu bringen;
wobei die Schritte d) bis g) kontinuierlich ausgeführt werden.

2. Verfahren nach dem vorhergehenden Anspruch, **dadurch gekennzeichnet, dass** es einen Stripping-Schritt zum Entfernen unerwünschter flüchtiger Verbindungen umfasst.

3. Verfahren nach dem vorhergehenden Anspruch, **dadurch gekennzeichnet, dass** der Stripping-Schritt nach dem Klärungsschritt f) ausgeführt wird.

4. Verfahren nach einem der Ansprüche 2 bis 3, **dadurch gekennzeichnet, dass** das zum Strippen verwendete Schleppgas Luft oder ein anderes bei der Arbeitstemperatur nicht kondensierbares Gas ist.

5. Verfahren nach einem der Ansprüche 2 bis 4, **dadurch gekennzeichnet, dass** das zum Strippen verwendete Schleppgas auf einer Temperatur zwischen 80 °C und 140 °C ist.

6. Verfahren nach einem der vorhergehenden Ansprüche, **dadurch gekennzeichnet, dass** das Klären (Schritt f) in einem statischen Dekanter erfolgt, und dadurch, dass sich der Trub am Boden des Dekanters absetzt.

7. Verfahren nach einem der vorhergehenden Ansprüche, **dadurch gekennzeichnet, dass** der Trub, der sich am Boden des Dekanters abgesetzt hat, kontinuierlich entfernt und zwischen dem Schritt b) des Maischens und dem Schritt c) des Abtrennens des Trebers wieder in die Maische eingebracht wird.

8. Verfahren nach einem der vorhergehenden Ansprüche, **dadurch gekennzeichnet, dass** das Klären (Schritt f) bei einer Temperatur zwischen 82 °C und 87 °C erfolgt.

9. Verfahren nach einem der vorhergehenden Ansprüche, **dadurch gekennzeichnet, dass** das Abtrennen des Trebers (Schritt c) bei einer Temperatur zwischen 80 °C und 90 °C, vorzugsweise zwischen 82 °C und 87 °C, erfolgt.

10. Verfahren nach einem der vorhergehenden Ansprüche, **dadurch gekennzeichnet, dass** das Abtrennen des Trebers (Schritt c) durch Filtration erfolgt.

11. Verfahren nach dem vorhergehenden Anspruch, **dadurch gekennzeichnet, dass** die Filtration mit Hilfe von Filterpressen, insbesondere zwei oder drei parallel betriebenen Filterpressen, erfolgt.

12. Verfahren nach einem der vorhergehenden Ansprüche, **dadurch gekennzeichnet, dass** die Temperatur beim Maischen (Schritt b) durch direktes Einblasen von Dampf mit einem Druck zwischen 0,2 und 4 bar, vorzugsweise zwischen 0,7 und 2 bar, erhöht wird.

13. Verfahren nach einem der vorhergehenden Ansprüche, **dadurch gekennzeichnet, dass** die vorzerkleinerten Rohstoffe eine solche Malfeinheit aufweisen, dass mehr als 45 %, vorzugsweise mehr als 55 % und noch stärker bevorzugt mehr als 60 %, durch ein Sieb mit einer Maschenweite von 0,253 mm gehen.

14. Verfahren nach einem der vorhergehenden Ansprüche, **dadurch gekennzeichnet, dass** während des Kochschritts d) die Würze in einem Kochgefäß / einer Würzepfanne während einer Verweilzeit zwischen 20 und 75 min, vorzugsweise zwischen 30 und 50 min, auf einer Temperatur zwischen 95 °C und 105 °C gehalten wird.

15. Brauverfahren nach Anspruch 1, das mindestens die folgenden Schritte umfasst:
a) Zubereiten einer oder mehrerer Maischen durch Einmaischen von stärkehaltigen gemälzten oder nicht gemälzten Rohstoffen, die zuvor geschrotet wurden oder nicht,
b) Durchmischen der Maische, um Stärke zu vergärbaren Zuckern zu hydrolysieren;
c) Filtrieren des Trebers mittels Dünnschichtfilter bei einer Temperatur zwischen 80 und 90 °C, um eine Würze zu erhalten;
d) thermisches Behandeln der Würze bei einer Temperatur zwischen 95 °C und 105 °C;
e) Abkühlen der Würze bis auf eine Temperatur zwischen 80 °C und 90 °C;
f) kontinuierliches Klären der Würze bei einer Temperatur zwischen 80 °C und 90 °C;
g) Strippen mit einem Gas, das bei der Arbeitstemperatur nicht kondensierbar ist, als Schleppgas;
h) Abkühlen der geklärten Würze, um sie auf die Gärtemperatur zu bringen;
wobei die Schritte d) bis g) kontinuierlich ausgeführt werden.

## Claims

1. A brewing method that includes at least the following steps:
a) preparation of one or more mashes by mashing of materials containing starch, malted or not, previously ground or not,
b) brewing of the mash to hydrolyze the starch into fermentable sugars;
c) separation of the spent grains to obtain a wort;
d) heat treatment of the wort at a temperature comprised between 95°C and 140°C;
e) cooling of the wort to a temperature comprised between 80°C and 90°C;
f) clarification of the wort at a temperature comprised between 80°C and 90°C;
g) cooling of the clarified wort to bring it to the fermentation temperature;
steps d) to g) being carried out continuously.

2. The method according to the preceding claims, **characterized in that** it comprises a stripping step to eliminate unwanted volatile compounds.

3. The method according to the preceding claims, **characterized in that** the stripping step is done after the clarification step f).

4. The method according to any one of claims 2 to 3, **characterized in that** the driving gas used for the stripping is air or another gas that is not condensable at the working temperature.

5. The method according to any one of claims 2 to 4, **characterized in that** the driving gas used for the stripping is at a temperature comprised between 80°C and 140°C.

6. The method according to any one of the preceding claims, **characterized in that** the clarification (step f) is done in a static decanter and **in that** cold break precipitates in the bottom of the decanter.

7. The method according to any one of the preceding claims, **characterized in that** the cold break having precipitated in the bottom of the decanter is continuously eliminated and reintroduced into the mash between the brewing step b) and the separating step c) of the spent grains.

8. The method according to any one of the preceding claims, **characterized in that** the clarification (step f) is done at a temperature comprised between 82°C and 87°C.

9. The method according to any one of the preceding claims, **characterized in that** the separation of the spent grains (step c) is done at a temperature comprised between 80°C and 90°C, preferably between 82°C and 87°C.

10. The method according to any one of the preceding claims, **characterized in that** the separation of the spent grains (step c) is done by filtration.

11. The method according to the preceding claim, **characterized in that** the filtration is done using filter presses, in particular two or three filter presses placed in parallel.

12. The method according to any one of the preceding claims, **characterized in that** the brewing temperature (step b) is raised via direct injection of steam at a pressure comprised between 0.2 and 4 bars, preferably between 0.7 and 2 bars.

13. The method according to any one of the preceding claims, **characterized in that** the previously ground raw materials have a fine grinding whereof more than 45%, preferably more than 55%, and still more preferably more than 60% pass through a sieve having openings of 0.253 mm.

14. The method according to any one of the preceding claims, **characterized in that** during the boiling step d), the wort is kept in a boiling/forming vat at a temperature comprised between 95°C and 105°C for a residence time comprised between 20 and 75 min., preferably comprised between 30 and 50 min.

15. The brewing method according to claim 1, including at least the following steps:
a) Preparing one or more mashes by mashing of materials containing starch, malted or not, previously ground or not,
b) brewing the mash to hydrolyze the starch into fermentable sugars;
c) filtering the spent grains on a thin-layer filter, at a temperature comprised between 80 and 90°, to obtain a wort;
d) heat treating the wort at a temperature comprised between 95°C and 105°C;
e) cooling the wort to a temperature comprised between 80°C and 90°C;
f) continuously clarifying the wort at a temperature comprised between 80°C and 90°C;
g) stripping with a gas that is not condensable at the working temperature as driving gas;
h) cooling the clarified wort to bring it to the fermentation temperature;
steps d) to g) being carried out continuously.
